# EUROPÄISCHE PATENTSCHRIFT

(11) **EP 1 786 071 B1**
(45) Veröffentlichungstag und Bekanntmachung des Hinweises auf die Patenterteilung: **07.01.2009**
(21) Anmeldenummer: 06123126.2
(22) Anmeldetag: 30.10.2006
(51) Int. Cl.: H01R 31/06, H01R 24/06, H01R 13/627

(54) **Adapter zur Aufnahme eines Steckerteiles**
Adapter to receive a male connector part
Adapteur pour recevoir une partie mâle d'un connecteur

(30) Priorität: 09.11.2005 DE 202005017471 U; 22.04.2006 DE 202006006606 U; 03.08.2006 DE 202006011910 U
(43) Veröffentlichungstag der Anmeldung: 16.05.2007
(60) Teilanmeldung: 08170586.5
(73) Patentinhaber: Weidmüller Interface GmbH & Co. KG, 32758 Detmold (DE)
(72) Erfinder: Muhs, Andreas, 34434, Borgentreich (DE); Hanning Claudia, 32758, Detmold (DE); Ziemke, Jürgen, 32760, Detmold (DE); Höing, Michael, 32657, Lemgo (DE); Schnatwinkel, Michael, 32051, Herford (DE); Mücke, Michaela, 32756, Detmold (DE); Seereiner, Simon, 33602, Bielefeld (DE); Lütkemeier, Ulrich, 32758, Detmold (DE)
(74) Vertreter: Specht, Peter

(56) Entgegenhaltungen:
- WO-A-03/012932
- DE-A1-9102004 004 22
- DE-B3- 10 236 275
- US-A1- 2005 064 752

## Beschreibung

Die Erfindung betrifft einen Adapter zur Aufnahme eines Steckerteiles nach dem Oberbegriff des Anspruchs 1.

Adapter der gattungsgemäßen Art ermöglichen den Einsatz der in sie eingesetzten Steckerteile auch in rauerer Umgebung - beispielsweise in Produktionsanlagen oder Fahrzeugen - durch Erreichen einer im Vergleich zur Schutzklasse des Steckerteils höheren Schutzklasse wie z.B. IP65 oder IP67.

Eine gattungsgemäße Anordnung für einen Telefonstecker ist aus der US 4,349,236 (Bell Telephone Laboratories) bekannt.

Weiterentwickelt bzw. verankert wurde die Idee des Erreichens höher Anforderungen aus Umgebungsklassifikationen in der IEC 61067-3-106 Variante 4, in der EN 50173-1:2005, in der ISO/IEC 24702 und in der IEC 61918.

Eine Möglichkeit zur Realisierung dieser Normen zeigt die DE 102 36 275 B3 gemäß dem Oberbegriff des Anspruchs 1. Diese bekannte Konstruktion weist allerdings das Problem auf, dass sie nur für die Übertragung elektrischer Signale geeignet ist und dass es in der Regel einer Bauraumvergrößerung bedarf, um die Lösung auch für andere Steckerteile, z.B. der Lichtleitertechnik (beispielsweise mit SC-Simplex-Einsätzen insbesondere im Abstand 7,35 mm), nutzen zu können. Die bekannte Konstruktion sollte zudem in Hinsicht auf hohe mechanische und chemische Belastungen verbessert werden, denen sie nicht optimal gerecht wird.

Die Erfindung hat daher die Aufgabe, einen verbesserten Adapter zu schaffen, mit dem es möglich ist, mit einfachen konstruktiven Mitteln hohen mechanischen und chemischen Beanspruchungen und Anforderungen gerecht zu werden.

Vorzugsweise soll dabei auch auf einfache Weise eine Aufnahme von Steckerteilen verschiedener Ausgestaltung möglich sein, ohne den Adapter verändern zu müssen. Wünschenswert wäre vorzugsweise eine Nutzbarkeit für:
- Stecker der Datenübertragungstechnik mit Kupfer und/oder Lichtwellenleitern, insbesondere für Ethernet- und Feldbussysteme;
- Stecker der Energieversorgungstechnik mit Kupfer- und/oder Druckluftleitungen; und
- Stecker der Signalübertragungstechnik mit Kupferleitern, insbesondere für Sensoren und/oder Aktoren.

Die Erfindung löst die oben genannte Aufgabe durch den Gegenstand des Anspruchs 1.

Danach weist das Aufnahmegehäuse einen vorderen Aufnahmeabschnitt für das Steckerteil auf und einen sich daran direkt einstückig anschließenden zylindrischen Abschnitt mit einem sich über einen Teil der axialen Länge erstreckenden Außengewinde zum Aufschrauben einer Mutter für die Kabeldurchführung. Die Mutter weist ferner ein sich über einen Teil ihrer axialen Länge erstreckendes Innengewinde und einen sich über das Gewindeende axial heraus erstreckenden Hülsenabschnitt auf, der einen etwas größeren Innendurchmesser aufweist als der Außendurchmesser des zylindrischen Abschnittes, so dass zwischen dem Innendurchmesser des Hülsenabschnittes und dem Außendurchmesser des zylindrischen Abschnittes ein in Richtung eines Steckgesichtes offener und am anderen Ende von dem verschraubten Gewinde axial verschlossener Ringraum ausgebildet ist, in den ein Hülsenabschnitt einer Schiebehülse oder einer zwischen der Schiebehülse und der Mutter angeordneten Adapterhülse eingreift.

Vorteilhafte Ausgestaltungen sind den Unteransprüchen zu entnehmen.

Die Erfindung setzt an der genormten Konstruktion an und entwickelt sie insbesondere im Bereich des abzudichtenden Bereiches zwischen der Mutter der Kabeldurchführung und der Schiebehülse mit einfachen Mitteln in entscheidender Weise derart weiter, dass eine hohe Dichtigkeit und eine mechanische und chemische Resistenz erreicht wird. Der Adapter ist zudem für Steckerteile verschiedenster Art nutzbar, ohne dass zum Erreichen einer hohen Schutzklasse wie IP65 oder IP67 die Konstruktion grundsätzlich geändert werden müsste.

Es ist gegebenenfalls lediglich notwendig, einen Hilfsrahmen zu verwenden oder Teile des Adapters aus einem bestimmten Material zu fertigen. So können viele der Teile des Adapters entweder aus Kunststoff oder Metall gefertigt werden. Je nach Anforderungsprofil wird die optimale Materialauswahl getroffen.

Nach einer weiteren vorteilhaften Variante, die auch als unabhängige Erfindung zu verstehen ist, ist das wenigstens eine Steckerteil in einen Hilfsrahmen eingesetzt, welcher in das Aufnahmegehäuse einsetzbar ist. Vorzugsweise ist dabei auch der Hilfsrahmen im Aufnahmegehäuse verrastbar. Der Hilfsrahmen ermöglicht es, auf einfachste Weise verschiedene Steckerelemente in einheitlich gestaltete Aufnahmegehäuse einzusetzen. Die Notwendigkeit zur Bereithaltung verschiedener Aufnahmegehäuse entfällt damit. Es ist auch denkbar, dass einige Steckerteile mit dem Hilfsrahmen befestigbar sind und dass anders gestaltete Steckerteile direkt ohne Hilfsrahmen direkt im Aufnahmegehäuse einsetzbar und dort verrastbar sind.

Nachfolgend wird die Erfindung unter Bezug auf die Zeichnung anhand von Ausführungsbeispielen näher erläutert, wobei auch weitere Vorteile der Erfindung deutlich werden. Es zeigt:
- Fig. 1: eine erste perspektivische Ansicht eines Adapterteils, in das ein erstes Datenverarbeitungs-Steckerteil mit elektrischen Kontakten aus dem Büroumfeld eingesetzt ist;
- Fig. 2: eine Sprengansicht von Elementen der Anordnung aus Fig. 1;
- Fig. 3: eine erste perspektivische Ansicht eines Adapterteils, in das ein zweites Steckerteil mit elektrischen Kontakten aus dem Industrieumfeld eingesetzt ist;
- Fig. 4: eine Sprengansicht von Elementen der Anordnung aus Fig. 3;
- Fig. 5: eine erste perspektivische Ansicht eines Adapterteils, in das ein LC-Steckerteil für Kabel mit Lichtwellenleitern eingesetzt ist;
- Fig. 6: eine Sprengansicht von Elementen der Anordnung aus Fig. 5;
- Fig. 7: eine erste perspektivische Ansicht eines Adapterteils, in das ein SC-Steckerteil für Kabel mit Lichtwellenleitern eingesetzt ist;
- Fig. 8: eine Sprengansicht von Elementen der Anordnung aus Fig. 7;
- Fig. 9-11 1: verschiedene Sprengansichten von Elementen des Adapters aus Fig. 1 aus unterschiedlichen Richtungen; und
- Fig. 12, 13: eine perspektivische Ansicht und eine Schnittansicht des zusammengebauten Adapters aus Fig. 1-11; und

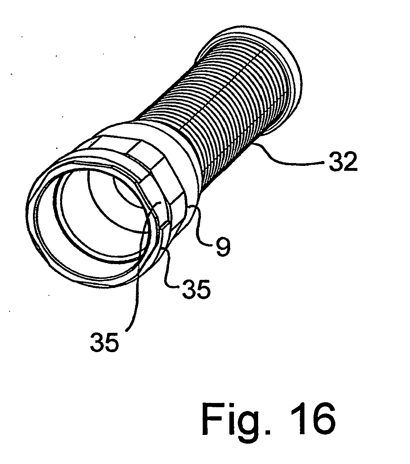

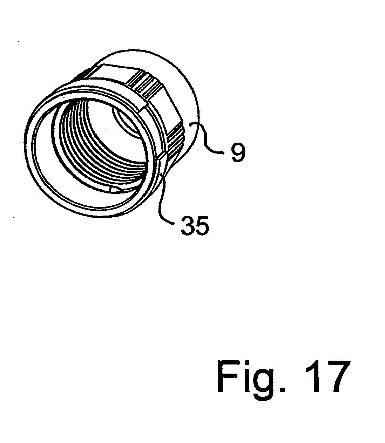

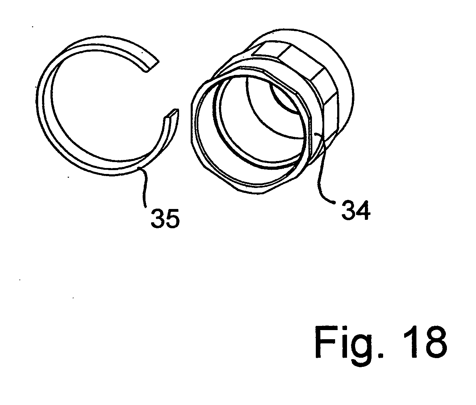

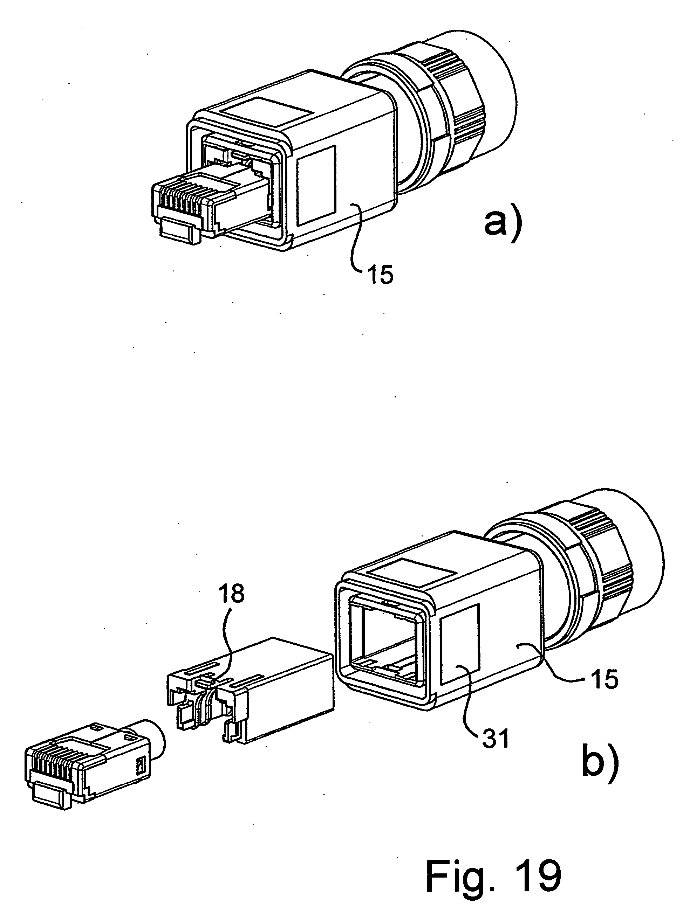

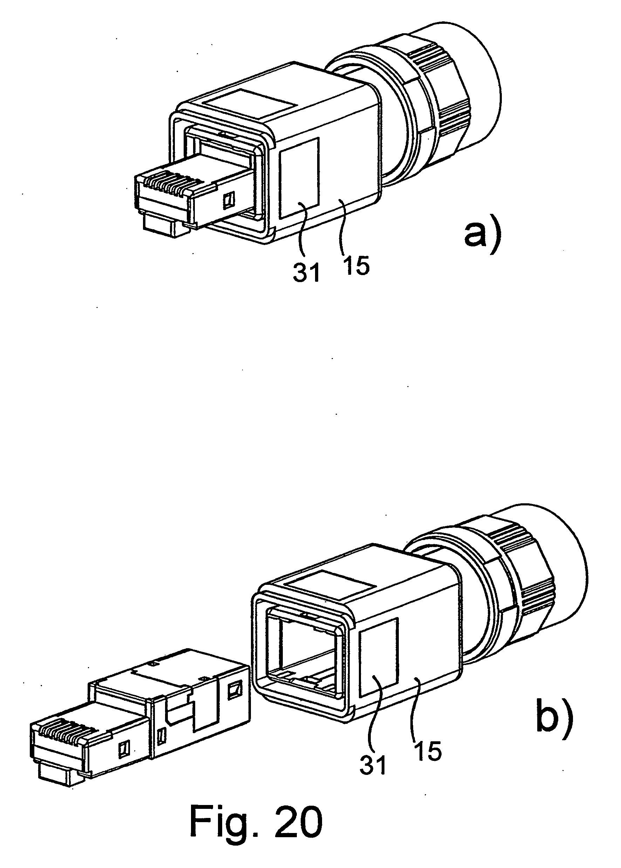

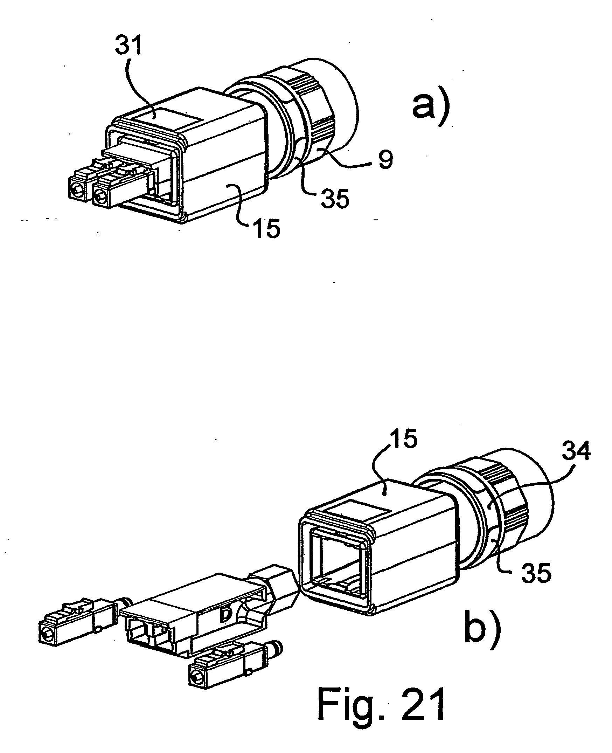

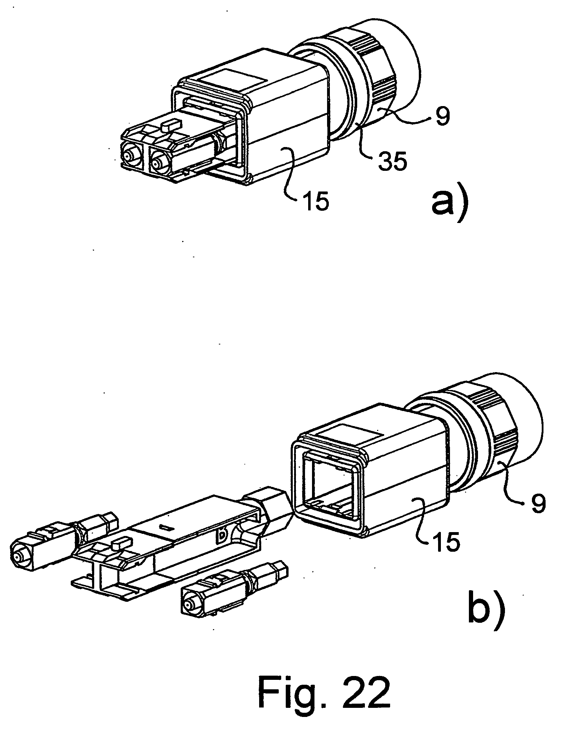

- Fig. 14-22: weitere Ansichten von Adaptern und Elementen von erfindungsgemäßen Adaptern.

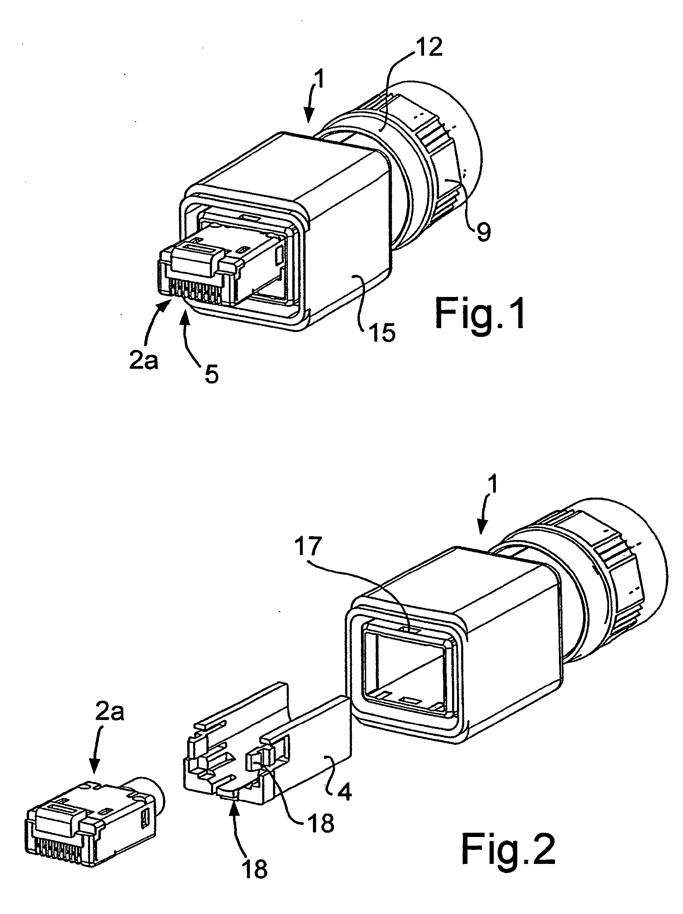

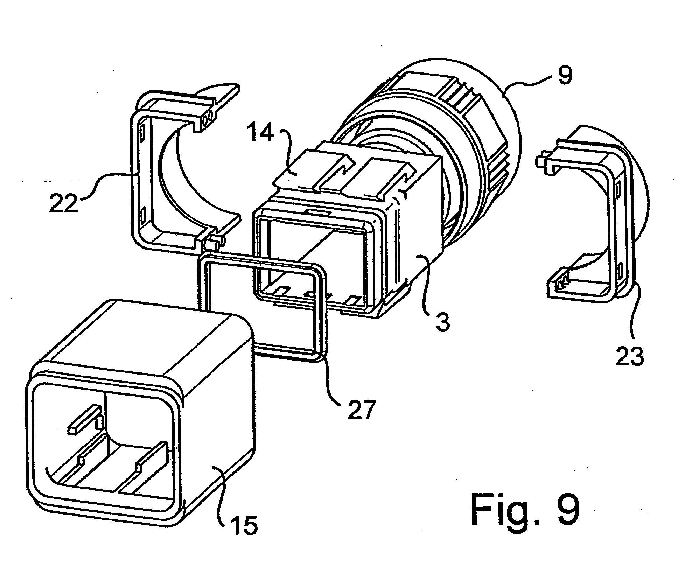

Fig. 1 - 13 zeigen jeweils einen mehrteiligen Adapter 1, in das jeweils ein ein- oder mehrstückiges Steckerteil 2, in Fig. 2 z.B. ein Steckerteil 2a des Büroumfeldes im sogenannten RJ45-Standard, eingesetzt ist. Der Adapter 1 ermöglicht den Einsatz des Steckerteils auch in rauerer Umgebung. Der Begriff Steckerteil ist nicht einschränkend zu verstehen. Es können am Steckerteil Lichtleitelemente, elektrische Stift- und/oder Buchsenkontakte verschiedenster Bauart oder z.B. auch Elemente zur pneumatischen Steckverbindung ausgebildet sein.

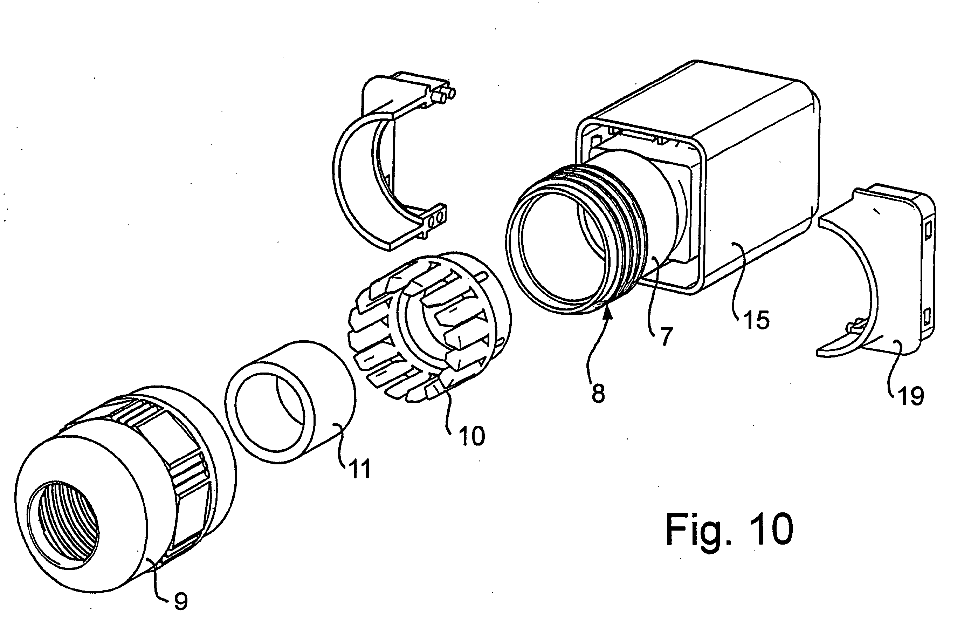

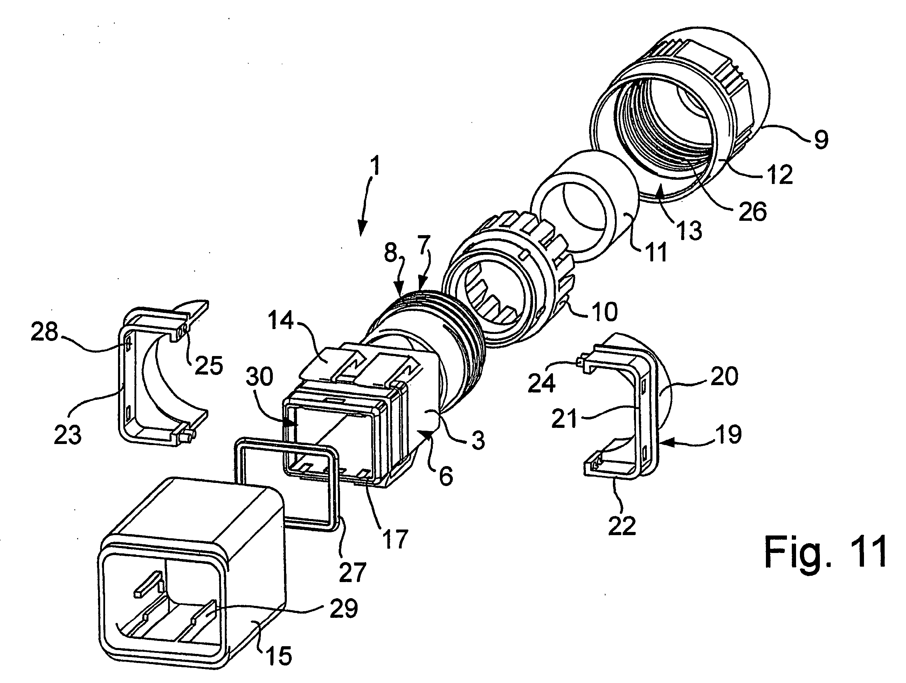

Der Aufbau des optimierten erfindungsgemäßen Adapters 1 erschließt sich am besten aus dem Zusammenspiel der Fig. 10 bis 13, wobei zunächst Fig. 11 beschrieben werden soll.

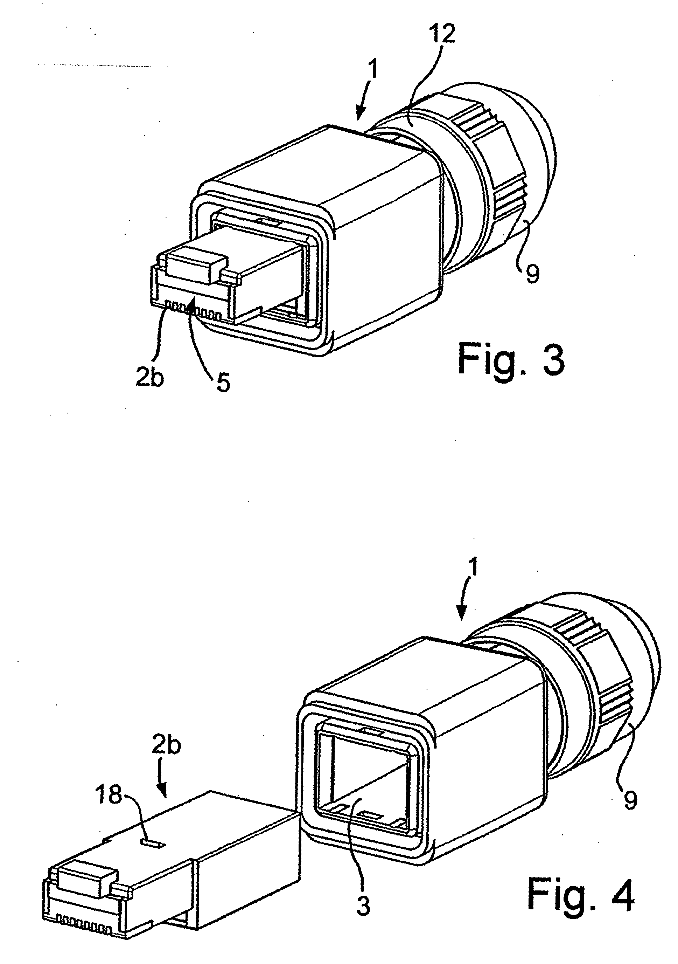

Der Adapter weist danach ein Aufnahmegehäuse 3 auf, das zur rastenden Aufnahme des aufzunehmenden Steckerteils 2 direkt (Fig. 4; Steckerteil 2b) oder über einen Hilfs- bzw. Montagerahmen 4 ausgelegt ist (Fig. 2, 6, 8), in welchen zuvor das/die jeweiligen Steckerteil(e) 2a, 2c, 2d eingesetzt wird/werden.

Das Aufnahmegehäuse 3 ist an seinen beiden Enden hülsenartig offen ausgestaltet.

Eines der offenen Enden wird im montierten Zustand (siehe Fig. 1, 3, 5, 7) vom Steckgesicht 5 des Steckerteils 2 durchsetzt. Das andere offene Ende ist als Durchführung für ein an das Steckerteil angeschlossenes Kabel (letzteres hier nicht dargestellt) ausgebildet.

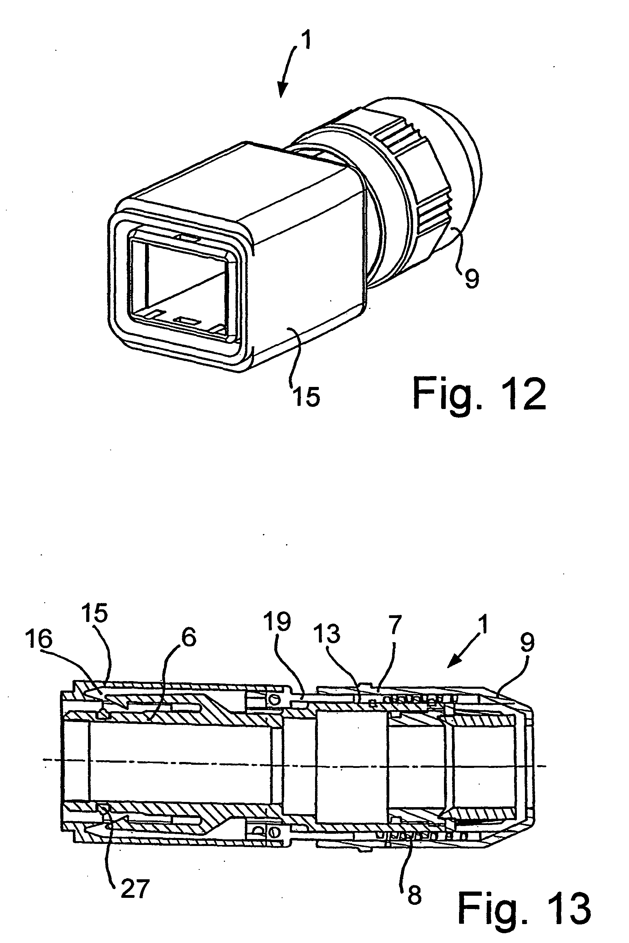

Das Aufnahmegehäuse 3 weist zur Realisierung dieser Funktionen (siehe Fig. 11 und 13) einen vorderen Aufnahmeabschnitt 6 für das Steckerteil 2 auf und einen sich daran direkt einstückig anschließenden zylindrischen Abschnitt 7 mit einem sich über einen hinteren (am vom Abschnitt 6 abgewandten Ende) Teil seiner axialen Länge erstreckenden Außengewinde 8 zum Aufschrauben einer deckelartigen, sich an ihrem von dem Gewindebereich abgewandten Ende verjüngenden Mutter 9 für die Kabeldurchführung, die korrespondierend ein sich über einen Teil ihrer axialen Länge erstreckendes Innengewinde 26 aufweist.

Innerhalb der Mutter 9 können am bzw. im direkten Anschluss an den Abschnitt 7 Funktionselemente wie eine Spannzange bzw. ein Spannring 10 mit einem Dichtring 11 angeordnet sein, die jedenfalls abschnittsweise auch in den Abschnitt 7 eingreifen können. Da sich die Lage der Spannzange 10 mit dem Dichtring 11 damit quasi innerhalb des Gewindes und die Dichtung 11 ganz oder teilweise innerhalb der Spannzange 10 befindet, ist die Länge der Anordnung reduzierbar.

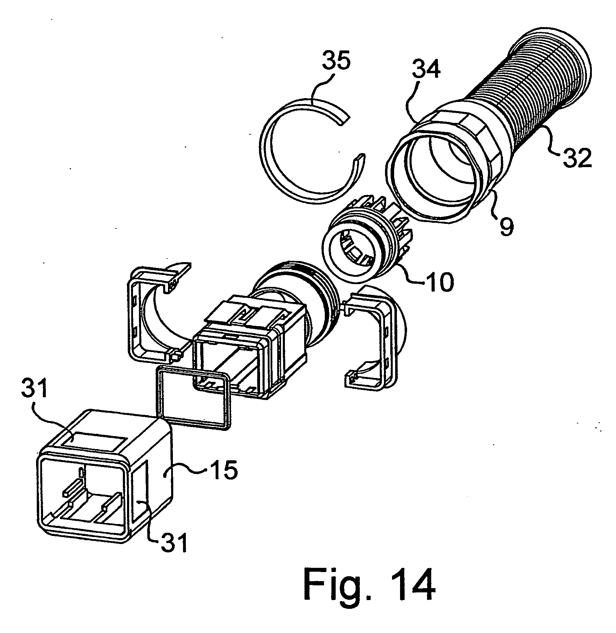

Optional ist ein Knickschutz, insbesondere an oder in der Mutter 9, realisierbar (fig. 14 ff), der z.B. aus Kunststoff oder Metall bestehen kann.

Die Durchführung der erfindungsgemäßen Konstruktion ist ohne weiteres für Kabelmanteldurchmesser von ca. 5 - 10 mm nutzbar.

Die Mutter 9 weist in ihrem zum Steckgesicht hin orientierten Ende einen sich über das Gewindeende axial heraus erstreckenden Hülsenabschnitt 12 auf, der einen etwas größeren Innendurchmesser aufweist als der Außendurchmesser des zylindrischen Abschnittes 7, so dass zwischen dem Innendruchmesser des Hülsenabschnittes 12 und dem Außendurchmesser des zylindrischen Abschnittes 7 ein in Richtung des Steckgesichtes offener und am anderen Ende von dem Gewinde axial verschlossener Ringraum 13 ausgebildet wird (Fig. 11), dem eine zentrale Funktion bei der erreichten Dichtwirkungsoptimierung zukommt (siehe unten), denn es wird ein guter Schutz gegen mechanische und chemische Beanspruchungen realisiert und insbesondere das Eindringen von Schmutz und Feuchtigkeit in den Verriegelungsmechanismus verhindert.

Das Aufnahmegehäuse 3 weist an seiner Außenfläche hier an zwei gegenüber liegenden Seiten Rasthaken 14 zum Zusammenwirken mit einem hier nicht dargestellten Steckergegenstück auf, welches z.B. nach Art des gattungsgemäßen Standes der Technik aufgebaut sein kann. Die Rasthaken 14 entsprechen der von der eingangs genannten Norm geforderten Ausgestaltung. Ihre Funktion korrespondiert mit der inneren Formgebung einer über das Aufnahmegehäuse 3 schiebbaren Schiebehülse 15, welche das Aufnahmegehäuse 3 hülsenartig geschlossen umgibt und bei einem Rückziehen die Rasthaken 14 in ihre korrespondierenden Ausnehmungen 16 zieht. Rippen 29 in der Schiebehülse 15 dienen der Führung des Steckerteils 2 und/oder als Anschlag für die Bewegung der Schiebehülse 15.

Die Schiebehülse 15 weist einen im Wesentlichen rechteckigen Querschnitt auf. Zum Steckgesicht 5 hin ist ein Dichtring 27 zwischen der Schiebehülse 15 und dem Aufnahmegehäuse 3 angeordnet.

An dem Innenumfang und/oder am Außenumfang des Aufnahmegehäuses 3 sind Rastmittel, hier z.B. Rastausnehmungen 17 angeordnet, an denen korrespondierende Rastmittel, hier Rasthaken 18 des Steckerteils oder des Hilfsrahmens 4 verrastbar sind, um das Steckerteil bzw. den Hilfsrahmen am Aufnahmerahmen 3 zu verrasten.

Das Aufnahmegehäuse 3 kann einen inneren Bund aufweisen, der sich dadurch ergibt, dass die Wände des Aufnahmegehäuses 3 abschnittweise im Einführungsbereich bzw. im Bereich der in Fig. 1 bis 8 vorderen Öffnung dünner ausgestaltet sind, um auch breite Steckerteile in das Aufnahmegehäuse 3 einschieben zu können. Die derart zurückgesetzten Seitenwände führen zu einer verbreiterten Öffnung im vorderen Bereich und erleichtern die Aufnahme breiter Steckerteile und deren Montage/Zuführung.

Diese Maßnahme trägt auch entscheidend dazu bei, relativ große Steckerteile im Adapter unterbringen zu können.

An die Schiebehülse 15 schließt sich in Richtung der Mutter 9 unmittelbar eine beispielsweise mit der Schiebehülse 15 rastend verbundene Adapterhülse 19 an, die an ihrem einen Ende einen Hülsenabschnitt 20 aufweist, der in den Ringraum 13 innerhalb des Ansatzes der Mutter 9 eingreift. Am anderen Ende greift sie mit einem Bundansatz 21 an Rastmitteln 28 in das axiale Ende der Schiebehülse ein, wobei es ergänzend denkbar ist, dass Dichtringe und/oder weitere Rastmittel die Adapterhülse 19 an der Schiebehülse 15 und/oder der Mutter 9 (im Ringraum 13) sichern.

Die Adapterhülse 19 kann aus zwei leicht montierbaren Halbschalen 22, 23 bestehen, die miteinander beispielsweise über einen Klemmsitz an Stiften 24 und korrespondierenden Sacklöchern 25 verbunden sind. Alternativ ist auch eine einstückige Ausgestaltung realisierbar (nicht dargestellt, z.B. aus Gummi bzw. einem Elastomer), sofern sie montierbar bzw. entformbar bleibt.

Derart wird auf einfachste Weise insbesondere im Bereich des Ringraumes 13, in welchen die Adapterhülse 19 (bzw. ein Hülsenabschnitt an der Schiebehülse) eingreift, eine gute Schutzwirkung insbesondere gegen das Eindringen von Schmutz und/oder Feuchtigkeit erzielt, die noch von Dichtringen oder weitere Maßnahmen zum Erreichen besonders hoher Schutzklassen gesteigert werden kann.

Optional ist es denkbar, auch die Adapterhülse 19 und die Schiebehülse 15 gemeinsam einstückig auszugestalten (nicht dargestellt). Die Adapterhülse 15, die vorteilhaft und leicht montierbar vorzugsweise aus den zwei Halbschalen 22, 23 besteht, kann ggf. als Zwei-Komponenten-Spritzgießteil mit Dichtringbereichen an ihren Innen- und Außenflächen gefertigt werden.

Nachfolgend werden weitere Vorteile der Konstruktion näher beschrieben.

Da die Steckerteile 2 direkt in dem inneren Aufnahmegehäuse 3 verrastet werden,_ergibt sich eine hohe Stabilität der Verrastung. Die vorstehende Öse nebst zugehöriger Zunge des Standes der Technik, die leicht beschädigt werden können, wird vermieden. Die Rastmittel 17, 18 sind zudem vorteilhaft derart außerhalb des Dichtrings 27 zwischen dem Aufnahmerahmen 3 und der Schiebehülse 15 angeordnet, dass ein Entriegeln bzw. Entrasten von außen möglich ist bzw. bleibt.

Um verschiedene Steckerteile 2 dichtend aufzunehmen, ist es lediglich notwendig, entweder die Steckerteile 2 oder die Hilfsrahmen 4 für die Steckerteile 2 mit den notwendigen Verrastungskonturen bzw. Rastmitteln 18 zur Verrastung an den Rastmitteln 17 zu versehen. Als Rastkonturen bzw. -mittel 18 sind Vorsprünge, Rasthaken, ein Loch, Ausnehmungen usw. denkbar, die am Steckerteil 2 ausgebildet werden und sich korrespondierend am Aufnahmegehäuse 3 wieder finden.

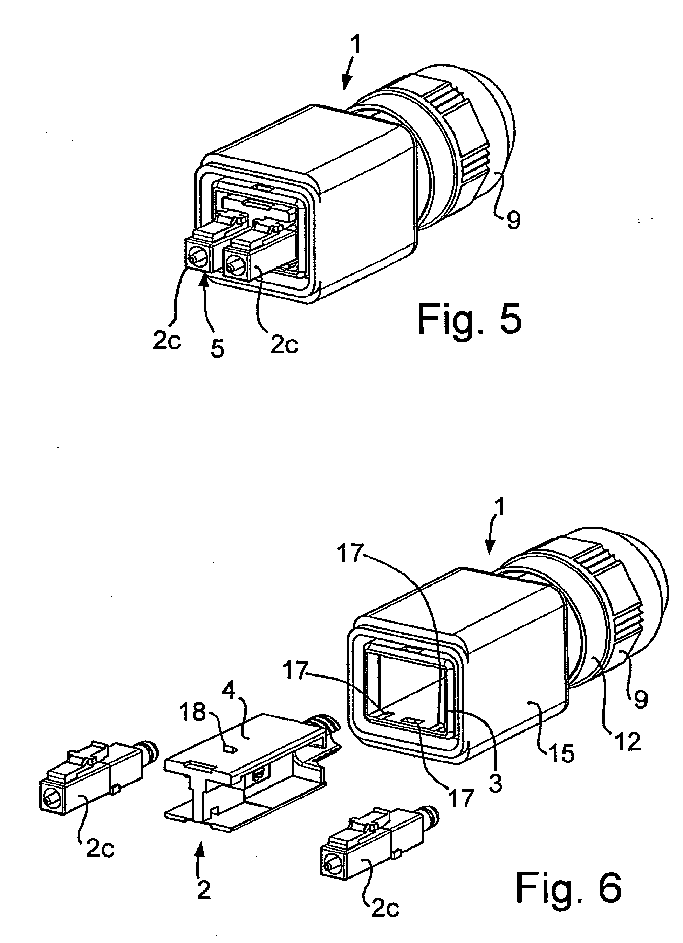

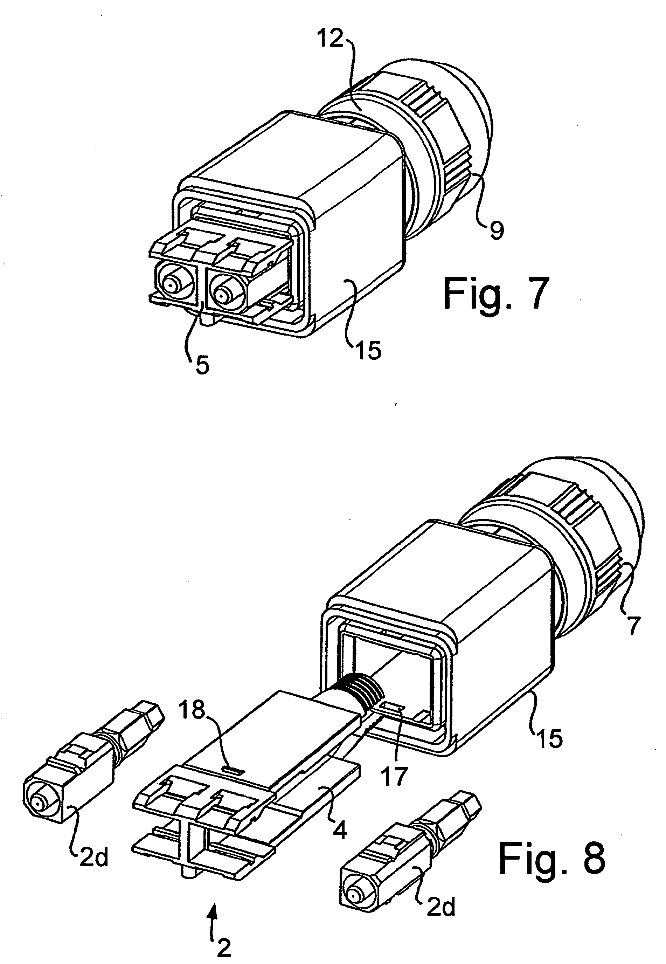

Mit Hilfe des Adapters 1 lassen sich derart auf einfache Weise die Aufnahme eines RJ45-Steckers (Bezugszeichen 2a, Fig. 1, 2) aus dem Office-Umfeld unter zu Hilfenahme des Adapters realisieren. Vorzugsweise sind folgende Stecker aufnehmbar:
- RJ45 8x AWG 27/7-24/7 (Piercing-Kontakte),
- RJ45 8xAWG 26/7-22/7 (IDC-Kontakte),
- LC-Duplex (Fig. 5 und 6),
- 2 x SC-Simplex-Einsätze (im Abstand eines SC-RJ: 7,35mm: Fig. 7 und 8),
- Power-Kontakte,
- USB,
- Firewire,
- KOAX und/oder
- Sensor-/Aktor-Kontakte.

Dabei ist die erfindungsgemäße Anordnung insbesondere zum Einsatz im Sensor/Aktor- bzw. Feldbustechnikbereich geeignet.

Die Schiebehülse 15 sowie die Adapterhülse 19 und/oder die Mutter 9 und/oder ein optionaler Knickschutz sind wie die Steckerteile 2 als Kunststoff- oder Metallteile oder auch als Verbundteile aus mehreren Materialen realisierbar. Bei der Metallausführung bestehen vorzugsweise alle äußeren Gehäuseteile aus Metall (gegen Schweißperlen und hohe mechanische Beanspruchung). Auch die nicht sichtbare, innere Steckeraufnahme bzw. das Aufnahmegehäuse 3 kann aus Metall bestehen, um hohen mechanischen Anforderungen gerecht zu werden. Je nach Anforderung und Anwendung können auch einzelne der Teile des Adapters aus Kunststoff und andere aus Metall bestehen. Am Aufnahmegehäuse 3 aus Metall bestehen vorzugsweise auch die Rasthaken 14 aus Metall, z.B. aus Federstahl, zur Erhöhung der mechanischen Stabilität. Mischformen (Aufnahmegehäuse 3 aus Kunststoff bzw. Metall und die Adapterhülse aus Metall bzw. Kunststoff sind denkbar).

Die Verriegelungshaken 14 können anstelle über eine Rampe auch über eine Wippe betätigt werden, um die Herstellungskosten zu senken (als low cost - Version, dann ohne Schiebehülse 15 und Adapterhülse 19).

Dem Adapter kann auch ein Arretierungselement zum Verriegeln der Position der Schiebehülse nach dem Einsetzen des Adapters in die Buchse zugeordnet sein. Das Arretierungselement kann als flexibles Ringsegment aus Kunststoff oder Federstahl ausgebildet sein und nach dem Herstellen der Steckverbindung (Adapter 1 mit Steckerteil 2 in Buchse) zwischen Schiebehülse 15 und Mutter 9 aufschnappbar sein. Eine kodierungsartige Farbgebung kann dann auch durch das bzw. am Arretierungselement realisiert sein (hier alles nicht dargestellt).

Vorteilhaft ist es noch, wenn die Mutter 9 aus Metall besteht und/oder dass an der Mutter 9 einstückig eine Zugentlastung, insbesondere schellenartig, angeordnet oder ausgebildet ist.

Vorzugsweise ist die optische Ebene des Steckerteils nach einer vorteilhaften Variante der Erfindung, die auch als unabhängige Erfindung betrachtet werden kann, derart am Adapter 1 ausgebildet, dass ein kupplungsstückfreier Anschluss der lichtführenden Medien (Glas, HCS, POF) zu einem Transceivergehäuse realisierbar ist (hier nicht dargestellt). Um dies zu erreichen, müssen unterschiedliche Dicken/Stärken von Schrank/Gehäusewänden und unterschiedliche Positionen / Lagen der Transceivergehäuse ausgeglichen werden können. Dies kann funktional gelöst werden, indem die "optische Ebene während der Kabel-/Steckerkonfektion positioniert" werden kann bzw. indem der "Verrastungspunkt des Hilfsrahmens 4 zusätzlich einstellbar im Adapter 1 gestaltet" wird.

Hierzu lässt sich alternativ zur "Standardverrastung in tiefster Position" der Hilfsrahmens 4 auch mit einer abgedichteten Schraube zwischen der Rasthakenbefestigung 14 im Aufnahmegehäuse 3 in nahezu beliebiger Lage weiter vom positionieren und festsetzen; dann erst wird die Schiebehülse 15 und Adapterhülse 19 montiert.

Hierzu bietet sich ein korrespondierendes Loch für die Befestigungsschraube an. Die Abdichtung lässt sich durch eine Flachdichtung unter dem teilweise abgesenkten Schraubenkopf realisieren.

Vorzugsweise ist das Aufnahmegehäuse 3 mit einem Befestigungsloch für den Hilfsrahmen 4 optional zur Ausführung ohne Befestigungsloch (aus dem gleichen Umbau-WZ realisierbar) bei sonst gleichem konstruktiven Aufbau und Abmessungen des Adapters 1 unter Erfüllung der IEC 61067-3-106 Variante 4 realisiert. Damit ergibt sich ein kupplungsstückfreier Anschluss der lichtführenden Medien durch freie Positionierbarkeit der optischen Ebene im Adapter mittels Befestigungsschraube.

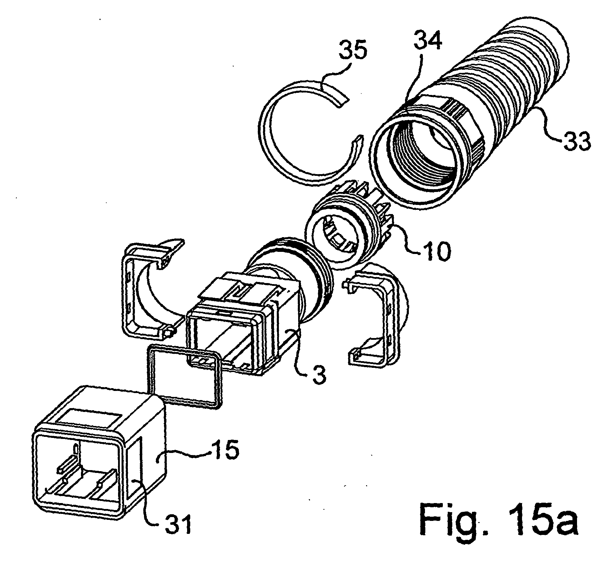

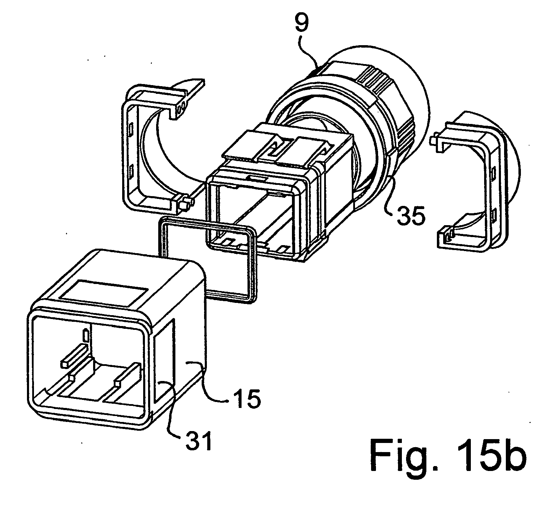

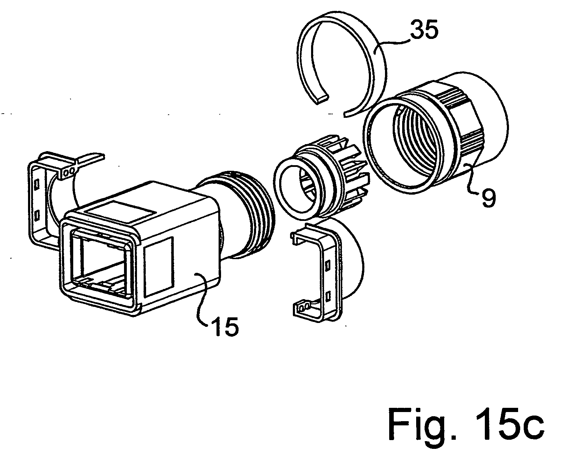

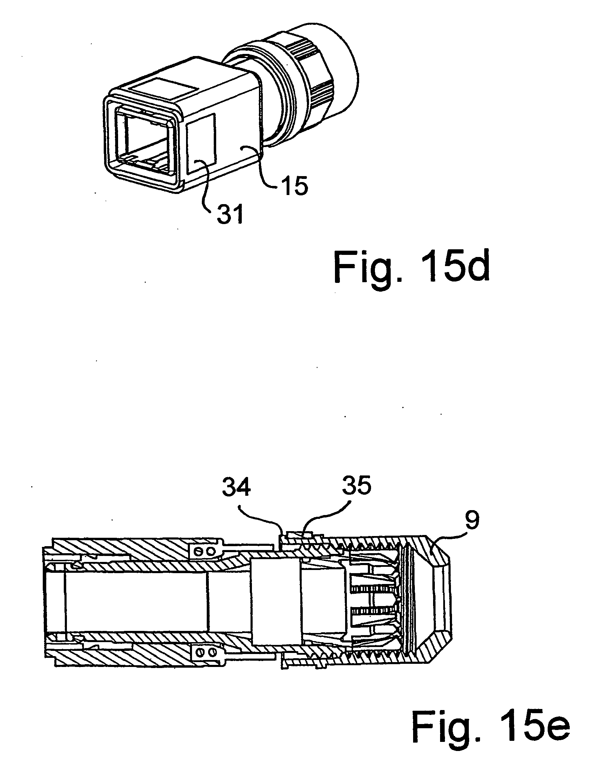

Nach Fig. 14 und 15 und nach einigen der weiteren Figuren sind an der Schiebehülse 15 außen Flächen 31 (Vertiefungen) ausgebildet, die sich zur Aufnahme von Markieren oder dgl. (auch Klebeschildern) eignen.

Fig. 14 und 15 sowie einige der weiteren Figuren offenbaren ferner an der Mutter 9 die bereits weiter vom erwähnte Knickschutztülle 32, 33 für ein Kabel am Steckerteil 2, die nach Fig. 14 aus Metall und nach Fig. 15 aus Kunststoff besteht.

Die Mutter 9 weist ferner an ihrem Außenumfang eine Nut 34 zur Aufnahme eines vorzugsweise geschlitzten Ringes 35 auf, der z.B. als Farbmarkierung nutzbar ist.
Fig. 14 und 15 zeigen auch eine alternative Ausgestaltung der Spannzange 10 (hier ohne Dichtring 11).

### Bezugszeichen

- Adapter: 1
- Steckerteil: 2
- Bürosteckerteil: 2a,c,d
- Industriesteckerteil: 2b
- Aufnahmegehäuse: 3
- Hilfsrahmen: 4
- Steckgesicht: 5
- Aufnahmeabschnitt: 6
- zylindrischer Abschnitt: 7
- Außengewinde: 8
- Mutter: 9
- Spannzange/Dichtring: 10, 11
- Hülsenabschnitt: 12
- Ringraum: 13
- Rasthaken: 14
- Schiebehülse: 15
- Ausnehmungen: 16
- Rastausnehmungen: 17
- Rasthaken: 18
- Adapterhülse: 19
- Hülsenabschnitt: 20
- Bundansatz: 21
- Halbschalen: 22, 23
- Stiften: 24
- Sacklöcher: 25
- Innengewinde: 26
- Dichtring: 27
- Rastmittel: 28
- Rippen: 29
- Kante: 30
- Flächen: 31
- Knickschutztülle: 32,33
- Nut: 34
- Ring: 35

## Patentansprüche

1. Adapter zur Aufnahme eines Steckerteils (2), der folgendes aufweist:
a. ein Aufnahmegehäuse (3) zur vorzugsweise rastenden Aufnahme des aufzunehmenden Steckerteils (2), das an seinen beiden Enden hülsenartig offen ausgestaltet ist,
b. wobei eines der offenen Enden im montierten Zustand vom Steckgesicht (5) des Steckerteils (2) durchsetzt ist und das andere offene Ende als Durchführung für ein an das Steckerteil angeschlossenes Kabel ausgebildet ist,
wobei
c. das Aufnahmegehäuse (3) einen vorderen Aufnahmeabschnitt (6) für das Steckerteil (2) aufweist und einen sich daran direkt einstückig anschließenden zylindrischen Abschnitt (7) mit einem sich über einen Teil der axialen Länge erstreckenden Außengewinde (8) zum Aufschrauben einer Mutter (9) für die Kabeldurchführung,
d. die Mutter (9) ein sich über einen Teil ihrer axialen Länge erstreckendes Innengewinde (26) aufweist **dadurch gekennzeichnet das** die Mutter und einen sich über das Gewindeende axial heraus erstreckenden Hülsenabschnitt (12) aufweist, der einen etwas größeren Innendurchmesser aufweist als der Außendurchmesser des zylindrischen Abschnittes (7),
e. so dass zwischen dem Innendurchmesser des Hülsenabschnittes (12) und dem Außendurchmesser des zylindrischen Abschnittes (7) ein in Richtung eines Steckgesichtes (5) offener und am anderen Ende von dem verschraubten Gewinde axial verschlossener Ringraum (13) ausgebildet ist, in den ein Hülsenabschnitt (20) einer Schiebehülse (15) oder einer zwischen der Schiebehülse (15) und der Mutter (9) angeordneten Adapterhülse (19) eingreift.

2. Adapter nach Anspruch 1, **dadurch gekennzeichnet, dass** eine/die Adapterhülse (19) vorgesehen ist, welche mehrstückig ausgebildet ist.

3. Adapter nach einem der vorstehenden Ansprüche, **dadurch gekennzeichnet, dass** die Adapterhülse (19) aus zwei Halbschalen (22, 23) besteht.

4. Adapter nach einem der vorstehenden Ansprüche, **dadurch gekennzeichnet, dass** der Hülsenabschnitt (20) der Adapterhülse (19) in den Ringraum (13) innerhalb des Hülsenansatzes (12) der Mutter (9) und an seinem anderen Ende mit einem Bundansatz (21) in das axiale Ende der Schiebehülse (15) eingreift.

5. Adapter nach einem der vorstehenden Ansprüche, **dadurch gekennzeichnet, dass** innerhalb der Mutter (9) im direkten Anschluss an den Abschnitt (7) Funktionselemente wie eine Spannzange bzw. ein Spannring (10) mit wenigstens einem ein- oder mehrteiligen Dichtring (11) angeordnet sind, die jedenfalls abschnittsweise auch in den Abschnitt (7) eingreifen.

6. Adapter nach einem der vorstehenden Ansprüche, **dadurch gekennzeichnet, dass** der Dichtring (11) ganz oder abschnittsweise innerhalb der Spannzange (10) angeordnet ist.

7. Adapter nach einem der vorstehenden Ansprüche, **dadurch gekennzeichnet, dass** die Schiebehülse (15) einen im wesentlichen rechteckigen Querschnitt aufweist und dass zum Steckgesicht (5) hin ein Dichtring (27) zwischen der Schiebehülse (15) und dem Aufnahmegehäuse (3) angeordnet ist.

8. Adapter nach einem der vorstehenden Ansprüche, **dadurch gekennzeichnet, dass** das Aufnahmegehäuse (3) abschnittweise im Einführungsbereich für das Steckerteil (2) bis zu einer Kante (30) dünnere Wände aufweist als in seinem übrigen Bereich.

9. Adapter nach einem der vorstehenden Ansprüche, **dadurch gekennzeichnet, dass** an dem Innenumfang des Aufnahmegehäuses (3) Rastmittel wie Rastausnehmungen (17), Durchbrüche oder Rasthaken ausgebildet sind, an denen korrespondierende Rastmittel wie Rasthaken (18) des Steckerteils (2) oder des Hilfsrahmens (4) verrastbar sind.

10. Adapter nach einem der vorstehenden Ansprüche, **dadurch gekennzeichnet, dass** eine optische Ebene des Streckerteils derart am Adapter (1) positioniert ist, dass ein kupplungsstückfreier Anschluss lichtführender Medien (Glas, HCS, POF) zu einem Transceivergehäuse realisierbar ist.

11. Adapter nach einem der vorstehenden Ansprüche, **dadurch gekennzeichnet, dass** der Verrastungspunkt des Hilfsrahmens (4) im Adapter (1) einstellbar ausgestaltet ist.

12. Adapter nach einem der vorstehenden Ansprüche, **dadurch gekennzeichnet, dass** der Hilfsrahmen (4) mit einer vorzugsweise abgedichteten Schraube zwischen der Rasthakenbefestigung (14) im Aufnahmegehäuse (3) positionierbar ist.

13. Adapter nach einem der vorstehenden Ansprüche, **dadurch gekennzeichnet, dass** das Aufnahmegehäuse (3) mit einem Befestigungsloch versehen ist.

14. Adapter nach einem der vorstehenden Ansprüche, **dadurch gekennzeichnet, dass** das wenigstens eine Steckerteil (2c, d) in einen Hilfsrahmen (4) eingesetzt ist, welcher mitsamt dem Steckerteil in das Aufnahmegehäuse (3) einsetzbar ist.

15. Adapter nach Anspruch 14, **dadurch gekennzeichnet, dass** der Hilfsrahmen im Aufnahmegehäuse (3) verrastbar ist.

16. Adapter nach Anspruch 14 oder 15, **dadurch gekennzeichnet, dass** einige der Steckerteile (2) mit dem Hilfsrahmen (4) im Aufnahmegehäuse (3) befestigbar sind und dass weitere, anders gestaltete Steckerteile direkt ohne Hilfsrahmen (4) in das Aufnahmegehäuse (3) einsetzbar und dort verrastbar sind.

17. Adapter nach einem der vorstehenden Ansprüche, **dadurch gekennzeichnet, dass** die Rastmittel (17) außerhalb des Dichtringes (27) angeordnet sind.

18. Adapter nach einem der vorstehenden Ansprüche, **dadurch gekennzeichnet, dass** sich an die Schiebehülse (15) in Richtung der Mutter (9) unmittelbar die mit der Schiebehülse rastend verbundene Adapterhülse (19) anschließt.

19. Adapter nach einem der vorstehenden Ansprüche, **dadurch gekennzeichnet, dass** Dichtmittel wie Dichtringe zwischen der Mutter (9) und der Adapterhülse (19) ausgebildet sind.

20. Adapter nach einem der vorstehenden Ansprüche, **dadurch gekennzeichnet, dass** das Steckerteil (2) direkt oder mit einem Hilfsrahmen (4) im Aufnahmegehäuse (3) verrastet ist.

21. Adapter nach einem der vorstehenden Ansprüche, **dadurch gekennzeichnet, dass** die Schiebehülse (15) sowie ggf. die Adapterhülse (19) und/oder die Mutter (9) und/oder der optionale Knickschutz aus Kunststoff bestehen.

22. Adapter nach einem der vorstehenden Ansprüche, **dadurch gekennzeichnet, dass** die Schiebehülse (15) sowie ggf. die Adapterhülse (19) und/oder die Mutter (9) und/oder das Aufnahmegehäuse (3) aus Metall bestehen.

23. Adapter nach einem der vorstehenden Ansprüche, **dadurch gekennzeichnet, dass** am Aufnahmegehäuse (3) an der Außenfläche Rasthaken (14) ausgebildet sind.

24. Adapter nach einem der vorstehenden Ansprüche, **dadurch gekennzeichnet, dass** das Aufnahmegehäuse (3) aus Kunststoff oder Metall besteht.

25. Adapter nach einem der vorstehenden Ansprüche, **dadurch gekennzeichnet, dass** am Aufnahmegehäuse (3) aus Kunststoff Rasthaken (14) aus Metall angebracht sind.

26. Adapter nach einem der vorstehenden Ansprüche, **dadurch gekennzeichnet, dass** am Aufnahmegehäuse (3) aus Metall Rasthaken (14) aus Metall, insbesondere Federstahl angebracht sind.

27. Adapter nach einem der vorstehenden Ansprüche, **dadurch gekennzeichnet, dass** das Steckerteil in folgender Technik ausgebildet ist:
a. RJ45 8xAWG 26/7-22/7,
b. RJ45 8x AWG 27/7-24/7,
c. LC-Duplex (Fig. 5 und 6) und/oder
d. 2 x SC-Simplex-Einsätze.

28. Adapter nach einem der vorstehenden Ansprüche, **dadurch gekennzeichnet, dass** das Steckerteil in folgender Technik ausgebildet ist:
a. Power-Kontakte,
b. USB,
c. Firewire,
d. Sensor/Aktor-Kontakte und/oder
e. KOAX.

29. Adapter nach einem der vorstehenden Ansprüche, **dadurch gekennzeichnet, dass** das Steckerteil Kontakte aufweist, die nach Art von Kontakten von Sensoren und Aktoren ausgebildet sind.

30. Adapter nach einem der vorstehenden Ansprüche, **dadurch gekennzeichnet, dass** an/in der Mutter (9) ein Knickschutz angeordnet ist.

31. Adapter nach einem der vorstehenden Ansprüche, **gekennzeichnet durch** Flächen zur Anordnung von Markierungen und/oder eine kodierungsartige Farbgebung.

32. Adapter nach einem der vorstehenden Ansprüche, **dadurch gekennzeichnet, dass** ihm ein Arretierungselement zum Verriegeln der Position der Schiebehülse nach dem Einsetzen des Adapters (1) zugeordnet ist.

33. Adapter nach einem der vorstehenden Ansprüche, **dadurch gekennzeichnet, dass** das Arretierungselement als flexibles Ringsegment aus Kunststoff oder Federstahl ausgebildet ist und nach dem Herstellen der Steckverbindung zwischen Schiebehülse (15) und Mutter (9) aufschnappbar ist.

34. Adapter nach einem der vorstehenden Ansprüche, **dadurch gekennzeichnet, dass** die kodierungsartige Farbgebung durch das bzw. am Arretierungselement realisiert ist.

35. Adapter nach einem der vorstehenden Ansprüche, **dadurch gekennzeichnet, dass** die Mutter (9) aus Metall besteht und/oder dass an der Mutter (9) einstückig eine Zugentlastung, insbesondere schellenartig, angeordnet ist.

36. Adapter nach einem der vorstehenden Ansprüche, **dadurch gekennzeichnet, dass** an der Schiebhülse (15) Flächen (31), insbesondere Vertiefungen, ausgebildet sind, die zur Aufnahme von Markieren oder dgl. geeignet sind.

37. Adapter nach einem der vorstehenden Ansprüche, **dadurch gekennzeichnet, dass** an der Mutter (9) eine Knickschutztülle (32, 33) für ein Kabel am Steckerteil (2) angeordnet oder ausgebildet ist, die vorzugsweise aus Metall oder Kunststoff besteht.

38. Adapter nach einem der vorstehenden Ansprüche, **dadurch gekennzeichnet, dass** an der Mutter (9) eine Nut (34) zur Aufnahme eines vorzugsweise geschlitzten Ringes (35) ausgebildet ist.

## Claims

1. Adaptor to receive a male connector part (2), which comprises the following:
a. a holder housing (3) for holding the male connector part (2) to be received, preferably with detaining means, said holder housing being of open, sleeve-like design at both ends,
b. such that in the assembled condition one of the open ends in penetrated by the plug face (5) of the connector part (2) and the other open end is formed as a duct for a cable connected to the connector part,
such that
c. the holder housing (3) comprises a holding section (6) at the front for the connector part (2) and a cylindrical section (7) joined directly thereto in one piece, with an outer thread (8) that extends over part of its axial length for screwing on a nut (9) for the cable duct,
d. the nut (9) having an inner thread (26) that extends over part of its axial length,
**characterised in that** the nut comprises a sleeve section (12) which extends axially beyond the threaded part, which has an inside diameter somewhat larger than the outside diameter of the cylindrical section (7),
e. so that between the inside diameter of the said sleeve section (12) and the outside diameter of the said cylindrical section (7) is formed an annular space (13) axially open in the direction of a connector plug face (5) and at the other end closed by the screwed-on thread, in which a sleeve section (20) of a sliding sleeve (15) or an adaptor sleeve (19) arranged between the sliding sleeve (15) and the nut (9) engages.

2. Adaptor according to Claim 1, **characterised in that** an adaptor sleeve (19) is provided, which consists of more than one part.

3. Adaptor according to either of the preceding Claims, **characterised in that** the adaptor sleeve (19) consists of two half-shells (22, 23).

4. Adaptor according to any of the preceding claims, **characterised in that** the sleeve section (20) of the adaptor sleeve (19) engages within the annular space (13) inside the sleeve extension (12) of the nut (9) and at its other end with a collar attachment (21) in the axial end of the sliding sleeve (15).

5. Adaptor according to any of the preceding claims, **characterised in that** inside the nut (9) and directly in contact against the section (7) are arranged functional elements such as a clamping jaw or clamp ring (10) with at least one seal ring (11) made in one or more parts, which anyway also engage partially in the section (7).

6. Adaptor according to any of the preceding claims, **characterised in that** the seal ring (11) is arranged wholly or partially in the clamping jaw (10).

7. Adaptor according to any of the preceding claims, **characterised in that** the sliding sleeve (15) has an essentially rectangular cross-section and inside the plug face (5) a seal ring (27) is arranged between the sliding sleeve (15) and the holder housing (3).

8. Adaptor according to any of the preceding claims, **characterised in that** part of the holder housing (3), in the area where the connector part (2) is inserted, has thinner walls up to an edge (30) than in its other areas.

9. Adaptor according to any of the preceding claims, **characterised in that** on the inside periphery of the holder housing (3) are formed detaining means such as detaining recesses (17), perforations or detaining hooks, with which corresponding detaining means such as detaining hooks (18) of the connector part (2) or of the auxiliary frame (4) can be engaged.

10. Adaptor according to any of the preceding claims, **characterised in that** an optical plane of the connector part is positioned on the adaptor (1) in such manner that a coupling-element-free connection of light-guiding media (glass, HCS, POF) to a transceiver housing can be formed.

11. Adaptor according to any of the preceding claims, **characterised in that** the retention point of the auxiliary frame (4) in the adaptor (1) is adjustable.

12. Adaptor according to any of the preceding claims, **characterised in that** the auxiliary frame (4) can be positioned by means of a preferably sealed screw between the detaining hook fixture (14) in the holder housing (3).

13. Adaptor according to any of the preceding claims, **characterised in that** the holder housing (3) is provided with a fixing hole.

14. Adaptor according to any of the preceding claims, **characterised in that** at least one connector part (2c, d) is inserted into an auxiliary frame (4), which can be inserted together with the connector part into the holder housing (3).

15. Adaptor according to any of the preceding claims, **characterised in that** the auxiliary frame can be detained in the holder housing (3).

16. Adaptor according Claims 14 or 15, **characterised in that** some of the connector parts (2) can be fixed with the auxiliary frame (4) in the holder housing (3) and other, differently designed connector parts can be inserted directly into the holder housing (3) without an auxiliary frame (4) and detained therein.

17. Adaptor according to any of the preceding claims, **characterised in that** the detaining means (17) are arranged outside the seal ring (27).

18. Adaptor according to any of the preceding claims, **characterised in that** the adaptor sleeve (19) that is connected to and detained in the sliding sleeve (15) is directly adjacent to the sliding sleeve in the direction of the nut (9).

19. Adaptor according to any of the preceding claims, **characterised in that** sealing means such as seal rings are formed between the nut (9) and the adaptor sleeve (19).

20. Adaptor according to any of the preceding claims, **characterised in that** the connector part (2) is detained in the holder housing (3) directly or with the aid of an auxiliary frame (4).

21. Adaptor according to any of the preceding claims, **characterised in that** the sliding sleeve (15) and if necessary the adaptor sleeve (19) and/or the nut (9) and/or the optional kink protector are made of plastic.

22. Adaptor according to any of the preceding claims, **characterised in that** the sliding sleeve (15) and if necessary the adaptor sleeve (19) and/or the nut (9) and/or the holder housing (3) are made of metal.

23. Adaptor according to any of the preceding claims, **characterised in that** detaining hooks (14) are formed on the outside surface of the holder housing (3).

24. Adaptor according to any of the preceding claims, **characterised in that** the holder housing (3) is made of plastic or metal.

25. Adaptor according to any of the preceding claims, **characterised in that** metallic detaining hooks (14) are attached on the holder housing (3) made of plastic.

26. Adaptor according to any of the preceding claims, **characterised in that** metallic detaining hooks (14), in particular made of spring steel, are attached on the metallic holder housing (3).

27. Adaptor according to any of the preceding claims, **characterised in that** the connector part is one of the following types:
a. RJ45 8xAWG 26/7-22/7
b. RJ45 8xAWG 26/7-24/7
c. LC-Duplex (Figs. 5 and 6) and/or
d. 2 x SC-Simplex-inserts

28. Adaptor according to any of the preceding claims, **characterised in that** the connector part is one of the following types:
a. Power contacts
b. USB
c. Firewire
d. Sensor/Actor contacts and/or
e. COAX

29. Adaptor according to any of the preceding claims, **characterised in that** the connector part comprises contacts made in the manner of sensor and actor contacts.

30. Adaptor according to any of the preceding claims, **characterised in that** a kink protector is arranged on/in the nut (9).

31. Adaptor according to any of the preceding claims, **characterised in that** it comprises surfaces for the placement of markings and/or colour codes.

32. Adaptor according to any of the preceding claims, **characterised in that** it is associated with a detaining element for locking the position of the sliding sleeve after insertion of the adaptor (1).

33. Adaptor according to any of the preceding claims, **characterised in that** the detaining element is formed as a flexible ring segment made of plastic or spring steel, which can be snapped into place between the sliding sleeve (15) and the nut (9) after forming the plug connection.

34. Adaptor according to any of the preceding claims, **characterised in that** the colour coding is effected by or on the detaining element.

35. Adaptor according to any of the preceding claims, **characterised in that** the nut (9) consists of metal and/or a tension-relieving element, in particular of the clamping type, is arranged integrally on the nut (9).

36. Adaptor according to any of the preceding claims, **characterised in that** areas (31), in particular recessed areas, are formed on the sliding sleeve (15) to receive markings or suchlike.

37. Adaptor according to any of the preceding claims, **characterised in that** a short tube (32, 33), preferably made of metal or plastic, for the protection of a cable against kinking, is arranged or formed on the connector part (2).

38. Adaptor according to any of the preceding claims, **characterised in that** a groove (34) to hold a preferably split ring (35) is formed on the nut (9).

## Revendications

1. Adaptateur destiné à recevoir une partie mâle d'un connecteur (2) comprenant ce qui suit:
a. un logement récepteur (3) pour recevoir, de préférence par encliquetage, la partie mâle d'un connecteur (2) à recevoir, agencée de manière ouverte et selon un agencement de type manchon au niveau de ses deux extrémités,
b. une des extrémités ouvertes à l'état monté étant traversée par la face enfichable (5) de la partie mâle d'un connecteur (2) et l'autre extrémité ouverte étant formée pour servir de passage pour un câble connecté à la partie mâle d'un connecteur,
c. le logement récepteur (3) présentant une section réceptrice avant (6) pour la partie mâle d'un connecteur (2) et une section cylindrique (7) directement connectée à celui-ci d'un seul tenant avec un filetage extérieur (8) s'étendant sur une partie de sa longueur axiale pour visser un écrou (9) pour le passage de câble,
d. un écrou (9) présentant un filetage intérieur (26) s'étendant sur une partie de sa longueur axiale, **caractérisé en ce que** l'écrou présente une section de manchon (12) s'étendant axialement vers l'extérieur sur l'extrémité du filetage, lequel écrou présente un diamètre interne un peu plus grand que le diamètre externe de la section cylindrique (7),
e. de sorte que entre le diamètre interne de la section de manchon (12) et le diamètre externe de la section cylindrique (7), un espace annulaire (13) ouvert dans la direction d'une face enfichable (5) et fermé axialement à l'autre extrémité du filetage vissé est formé, dans lequel une section de manchon (20) d'un manchon coulissant (15) ou d'un manchon d'adaptation (19) agencé entre le manchon coulissant (15) et l'écrou (9) est mis en prise.

2. Adaptateur selon la revendication 1, **caractérisé en ce que** un/le manchon d'adaptation (19) formé de plusieurs tenants est prévu.

3. Adaptateur selon l'une quelconque des revendications précédentes, **caractérisé en ce que** le manchon d'adaptation (19) est constitué de deux demi-coques (22, 23).

4. Adaptateur selon l'une quelconque des revendications précédentes, **caractérisé en ce que** la section de manchon (20) du manchon d'adaptation (19) s'engrène dans l'espace annulaire (13) à l'intérieur de la saillie de manchon (12) de l'écrou (9) et au niveau de son autre extrémité avec un taquet (21) dans l'extrémité axiale du manchon coulissant (15).

5. Adaptateur selon l'une quelconque des revendications précédentes, **caractérisé en ce que** à l'intérieur de l'écrou (9), directement connectés à la section (7), des éléments fonctionnels tels qu'une pince de serrage respectivement un collier de serrage (10) comportant au moins une bague d'étanchéité (11) d'un seul tenant ou en plusieurs tenants, sont agencés, lesquels s'engrènent chaque fois par sections également dans la section (7).

6. Adaptateur selon l'une quelconque des revendications précédentes, **caractérisé en ce que** la bague d'étanchéité (11) est agencée complètement ou partiellement à l'intérieur de la pince de serrage (10).

7. Adaptateur selon l'une quelconque des revendications précédentes, **caractérisé en ce que** le manchon coulissant (15) présente une section transversale sensiblement carrée et **en ce qu'**une bague d'étanchéité (27) pour la face enfichable (5) est agencée entre le manchon coulissant (15) et le logement récepteur (3).

8. Adaptateur selon l'une quelconque des revendications précédentes, **caractérisé en ce que** le logement récepteur (3) présente par sections dans la zone d'introduction pour la partie mâle d'un connecteur (2) jusqu'à un bord (30) des parois plus minces que dans le reste de la zone.

9. Adaptateur selon l'une quelconque des revendications précédentes, **caractérisé en ce qu'**au niveau de la circonférence interne du logement récepteur (3), des éléments encliquetables tels que des creux d'encliquetage (17), des ajours ou des crochets d'encliquetage sont formés et auxquels des éléments d'encliquetage correspondants tels que des crochets d'encliquetage (18) de la partie mâle d'un connecteur (2) ou du châssis secondaire (4) peuvent être encliquetés.

10. Adaptateur selon l'une quelconque des revendications précédentes, **caractérisé en ce qu'**un plan optique de la partie mâle d'un connecteur est positionné au niveau de l'adaptateur (1) de sorte qu'une connexion sans élément de couplage de supports conduisant les rayons lumineux (verre, HCS, POF) puisse être réalisée en un logement d'émetteur-récepteur.

11. Adaptateur selon l'une quelconque des revendications précédentes, **caractérisé en ce que** le point d'enclenchement du châssis secondaire (4) peut être agencé de manière réglable dans l'adaptateur (1).

12. Adaptateur selon l'une quelconque des revendications précédentes, **caractérisé en ce que** le châssis secondaire (4) peut être positionné avec une vis, de préférence d'étanchéité, entre l'attache du crochet d'encliquetage (14) dans le logement récepteur (3).

13. Adaptateur selon l'une quelconque des revendications précédentes, **caractérisé en ce que** le logement récepteur (3) est doté d'un orifice d'attache.

14. Adaptateur selon l'une quelconque des revendications précédentes, **caractérisé en ce qu'**au moins une partie mâle d'un connecteur (2c, d) est placée dans un châssis secondaire (4), lequel peut être placé avec la partie mâle d'un connecteur dans le logement récepteur (3).

15. Adaptateur selon la revendication 14, **caractérisé en ce que** le châssis secondaire peut être encliqueté dans le logement récepteur (3).

16. Adaptateur selon la revendication 14 ou 15, **caractérisé en ce que** certaines des parties mâles d'un connecteur (2) peuvent être fixées avec le châssis secondaire (4) dans le logement récepteur (3) et que d'autres parties mâles d'un connecteur agencées autrement peuvent être placées directement sans châssis secondaire (4) dans le logement récepteur (3) et peuvent y être encliquetées.

17. Adaptateur selon l'une quelconque des revendications précédentes, **caractérisé en ce que** l'élément encliquetable (17) est agencé à l'extérieur de la bague d'étanchéité (27).

18. Adaptateur selon l'une quelconque des revendications précédentes, **caractérisé en ce que** le manchon d'adaptation (19) lié de manière encliquetable au manchon coulissant est immédiatement connecté au manchon coulissant (15) en direction de l'écrou (9).

19. Adaptateur selon l'une quelconque des revendications précédentes, **caractérisé en ce que** les éléments d'étanchéité sont formés comme des bagues d'étanchéité entre l'écrou (9) et le manchon d'adaptation (19).

20. Adaptateur selon l'une quelconque des revendications précédentes, **caractérisé en ce que** la partie mâle d'un connecteur (2) est encliquetée directement ou avec un châssis secondaire (4) dans le logement récepteur (3).

21. Adaptateur selon l'une quelconque des revendications précédentes, **caractérisé en ce que** le manchon coulissant (15) ainsi que le cas échéant le manchon d'adaptation (19) et/ou l'écrou (9) et/ou l'anticoque sont en matière plastique.

22. Adaptateur selon l'une quelconque des revendications précédentes, **caractérisé en ce que** le manchon coulissant (15) ainsi que le cas échéant le manchon d'adaptation (19) et/ou l'écrou et/ou le logement récepteur (3) sont en métal.

23. Adaptateur selon l'une quelconque des revendications précédentes, **caractérisé en ce que** des crochets d'encliquetage (14) sont formés au niveau de la surface extérieure du logement récepteur (3).

24. Adaptateur selon l'une quelconque des revendications précédentes, **caractérisé en ce que** le logement récepteur (3) est en matière plastique ou en métal.

25. Adaptateur selon l'une quelconque des revendications précédentes, **caractérisé en ce que** des crochets d'encliquetage (14) en métal sont placés au niveau du logement récepteur (3) en matière plastique.

26. Adaptateur selon l'une quelconque des revendications précédentes, **caractérisé en ce que** des crochets d'encliquetage (14) en métal, en particulier de l'acier à ressorts, sont placés au niveau du logement récepteur (3) en métal.

27. Adaptateur selon l'une quelconque des revendications précédentes, **caractérisé en ce que** la partie mâle d'un connecteur est formée selon la technique suivante :
a. un RJ45 8xAWG 26/7-22/7
b. un RJ45 8xAWG 27/7-24/7
c. un duplex LC (figures 5 et 6) et/ou
d. des inserts simplex 2 x SC.

28. Adaptateur selon l'une quelconque des revendications précédentes, **caractérisé en ce que** la partie mâle d'un connecteur est formée selon la technique suivante :
a. des contacts de puissance,
b. un bus série universel,
c. firemire
d. des contacts capteur/acteur et/ou
e. un câble coaxial.

29. Adaptateur selon l'une quelconque des revendications précédentes, **caractérisé en ce que** la partie mâle d'un connecteur présente des contacts formés à la manière de contacts de capteurs et d'acteurs.

30. Adaptateur selon l'une quelconque des revendications précédentes, **caractérisé en ce qu'**une anticoque est agencée au niveau de/dans l'écrou (9).

31. Adaptateur selon l'une quelconque des revendications précédentes, **caractérisé par** des surfaces pour l'agencement de marquages et/ou une coloration de type code.

32. Adaptateur selon l'une quelconque des revendications précédentes, **caractérisé en ce qu'**un élément d'arrêt pour bloquer la position du manchon coulissant après avoir placé l'adaptateur (1) est agencé sur celui-ci.

33. Adaptateur selon l'une quelconque des revendications précédentes, **caractérisé en ce que** l'élément d'arrêt est formé en tant qu'élément annulaire flexible en matière plastique ou en acier à ressorts et peut être verrouillé par ressort après la fabrication de la connexion de connecteur entre le manchon coulissant (15) et l'écrou (9).

34. Adaptateur selon l'une quelconque des revendications précédentes, **caractérisé en ce que** la coloration de type code est réalisée par respectivement sur l'élément d'arrêt.

35. Adaptateur selon l'une quelconque des revendications précédentes, **caractérisé en ce que** l'écrou (9) est constitué de métal et/ou **en ce qu'**une décharge de traction, en particulier de type à collier, est agencée au niveau de l'écrou (9) d'un seul tenant.

36. Adaptateur selon l'une quelconque des revendications précédentes, **caractérisé en ce que** des surfaces (31), en particulier des évidements, sont formées au niveau du manchon coulissant (15), lesquelles sont appropriées pour recevoir des marques ou similaires.

37. Adaptateur selon l'une quelconque des revendications précédentes, **caractérisé en ce qu'**un manchon anticoque (32, 33) pour un câble sur la partie mâle d'un connecteur (2) est agencé ou formé au niveau de l'écrou (9), lequel est de préférence constitué de métal ou de matière plastique.

38. Adaptateur selon l'une quelconque des revendications précédentes, **caractérisé en ce qu'**une encoche (34) pour recevoir une bague (35) ayant de préférence une encoche est formée au niveau de l'écrou (9).
